# EUROPEAN PATENT APPLICATION

(11) **EP 1 331 210 A1**
(43) Date of publication of application: **30.07.2003**
(21) Application number: 03001235.5
(22) Date of filing: 20.01.2003
(51) Int. Cl.: C04B 35/49

(54) **Zirconia sintered body, abrasion-resistant member, bearing ball, and member for optical connector**

(30) Priority: 18.01.2002 JP 2002010490; 18.01.2002 JP 2002010492
(71) Applicant: NGK SPARK PLUG CO., LTD, Mizuho-ku Nagoya-shi Aichi (JP)
(72) Inventor: Niwa, Tomonori, NGK Spark Plug Co., Ltd., Nagoya-shi, Aichi (JP)
(74) Representative: Grünecker, Kinkeldey, Stockmair & Schwanhäusser Anwaltssozietät

(57) **Abstract**

A zirconia sintered body comprising a zirconia and a titanium oxide and a process for producing a zirconia sintered body which comprises sintering a raw material mixture comprising a zirconia and a titanium oxide in an oxygen-free atmosphere comprising one of hydrogen, nitrogen and water.

## Description

### FIELD OF THE INVENTION

The present invention relates to a zirconia sintered body, an abrasion-resistant member, a bearing ball, a member for optical connectors, processes for zirconia sintered body production. More particularly; the invention relates to a zirconia sintered body which has a well balanced combination of excellent hardness and excellent fracture toughness, has electrical conductivity and is hence excellent also in antistatic property and suitability for electrical discharge machining, and has a high coefficient of thermal expansion and is hence suitable for use in combination with a metal in an environment where temperature changes occur repeatedly, to an abrasion-resistant member, bearing ball and optical-connector member each comprising the zirconia sintered body, and to processes for producing a zirconia sintered body which has been evenly colored black, is hence advantageous in an inspection for foreign matters, and has a dense structure or which has been evenly colored black and has a dense structure, and to a zirconia sintered body produced by any of the processes which is evenly black and is dense.

### BACKGROUND OF THE INVENTION

Bearings are used in machine tools, hard disks in computers, etc. Although the balls used in bearings (hereinafter referred to as bearing balls) are generally made of metals such as, e.g., bearing steels, ceramic bearing balls also are used in place of metallic bearing balls because of the necessity of higher abrasion resistance.

However, minute ceramic balls for the bearings to be used in motors in computer hard disks are difficult to produce. In addition, there have frequently been cases where such ceramic balls are difficult to judge non-defective or defective.

The bearing balls for use in the bearings in motors in computers are required to have suitability for high-speed rotation of, e.g., 5,400 rpm or higher in the bearing of a rotating drive unit. When a higher degree of the suitability is desired, the bearing balls are required to withstand a rotational speed of 7,200 rpm or higher, or 10,000 rpm or higher. Because of this, a silicon nitride-based ceramic, which has excellent abrasion resistance, was used as the material of such bearing balls. Since silicon nitride is an insulator, the bearing balls made of a silicon nitride-based ceramic are apt to be electrostatically charged.

There has hence been the following problem in the production of ball bearings employing bearing balls made of a silicon nitride-based ceramic. In the bearing ball conveyance lines, the bearing balls are electrostatically charged. As a result, the bearing balls adhere to the apparatus or attract dust particles. Because of this, the ball bearings cannot be produced smoothly.

Incorporation of titanium nitride may be effective in imparting antistatic properties to silicon nitride-based ceramics. However, since titanium nitride has an exceedingly high hardness, the sintered body of a silicon nitride-based ceramic containing titanium nitride has had a problem that the sintered body is difficult to work, e.g., polish, and is hence difficult to finish so as to have given dimensions.

When members made of ceramics including the silicon nitride-based ceramic are used in parts rotating at a high speed, these rotating parts heat up to a high temperature due to frictional heat. There is hence a desire for a ceramic member retaining its dimensional accuracy even at high temperatures and having strength, hardness, and toughness which enable the member to withstand high-speed motions. No ceramic member or bearing ball has been developed so far which has a well balanced combination of these properties. On the other hand, zirconia is used as the material of a member for optical connectors for use in optical communication. However, there are problems that it is difficult to work, e.g., drill, zirconia moldings and that in case where zirconia moldings are worked despite such difficulties, this working is too costly. Besides being thus used for producing bearing balls therefrom, ceramics have come to be used as the materials of sliding parts for use in the drive units of semiconductor devices, automotive sliding parts, e.g., tappets, etc., so as to take advantage of the high-temperature corrosion resistance of ceramics.

In producing various ceramic products, precise polishing is conducted and, after this polishing, the products are inspected for material defects, such as foreign matters and pores, and for defects caused by the polishing, such as mars, tears, and chipped areas. For this inspection is often used a stereomicroscope, metallographic microscope, or the like. Recently, however, the inspection is frequently made with an automatic appearance inspection machine or the like so as to cope with mass production and a cost reduction. In an inspection with the automatic appearance inspection machine, an image of the polished surface is formed and foreign matters present on the polished surface or defects such as pores are discriminated based on a contrast in color tone or lightness with the background.

In general, ceramic sintered bodies mostly have an appearance which is white or light-gray or has a similar color tone. Since defects such as pores and chipped areas likewise have a light color, the defects tend to poorly contrast with the background. Consequently, the discrimination accuracy in inspections with an automatic appearance inspection machine has been unsatisfactory. Especially in inspections with the automatic appearance inspection machine, defects are detected through data processing based on a difference in color and/or lightness between the background and the defects and, hence, improvements in inspection accuracy have been limited. Under these circumstances, a technique for obtaining a sintered body which has been purposely colored black or dark gray and reduced in color unevenness is disclosed in JP-A-4-254471 and JP-A-4-254473. This technique comprises sintering a molding containing a carbon source or comprises impregnating a porous object with carbon. However, this technique has a problem that the number of steps is increased because of the necessity of using a carbon source or conducting a carbon impregnation operation.

The quality of ceramic products to be shipped can be improved by thus removing defectives with the automatic appearance inspection machine and heightening the accuracy of this inspection.

On the other hand, an improvement in the quality of ceramic products can be attained also by preventing defectives to be produced. For example, if ceramic sintered bodies which are dense to such a degree as not to develop defects such as chipped areas can be produced by stabilizing the sintering of a ceramic, then the number of defectives rejected with an automatic appearance inspection machine decreases and ceramic products of higher quality should be obtained accordingly.

There is hence a desire for a simple method for sintering by which a ceramic sintered body which has a high density and is hence dense can be obtained for the purpose of improving the quality of ceramic products.

### SUMMARY OF THE INVENTION

An aim of the invention is to provide a zirconia sintered body which has a well balanced combination of excellent hardness and excel lent fracture toughness and has electrical conductivity and a high coefficient of thermal expansion. Another aim of the invention is to provide a zirconia sintered body which has excellent antistatic properties, can be easily worked by electrical discharge machining, and has a well balanced combination of excellent hardness and excellent fracture toughness. Still another aim of the invention is to provide a zirconia sintered body which does not readily break even when exposed to a high-speed motion and which is less apt to be impaired in dimensional accuracy. A further aim of the invention is to provide an abrasion-resistant member and a bearing ball each comprising the zirconia sintered body and to provide a member for optical connectors which comprises the zirconia sintered body and can be produced at low cost through an easy working operation, e.g., electrical discharge machining.

A further aim of the invention is to provide a process for producing a zirconia sintered body which is evenly black. Another aim of the invention is to provide a process for producing a dense zirconia sintered body having a high density. Still another aim of the invention is to provide a process for producing a zirconia sintered body which not only has a high density and is dense, but also has been evenly colored black to facilitate the discrimination of defectives with an automatic appearance inspection machine. A further aim of the invention is to provide a zirconia sintered body which has been evenly colored black and has a dense structure.

For accomplishing the aims described above, the invention provides, in one respect thereof,
a zirconia sintered body comprising a zirconia and titanium oxide.

In preferred embodiments of this zirconia sintered body,
(1) the content of the titanium oxide is from 10 to 40% by weight;
(2) the titanium oxide is TiₓO_{y} (wherein x is from 1 to 3 and y is from 1 to 5);
(3) the titanium oxide is contained as a conductivity-imparting agent;
(4) the zirconia is a partly stabilized zirconia;
(5) the zirconia sintered body has a coefficient of thermal expansion of 6.5x10⁻⁶/°C or higher;
(6) the zirconia sintered body has a Vickers hardness of 1,250 or lower;
(7) the zirconia sintered body has a fracture toughness of 4 MPam^{0.5} or higher;
(8) the zirconia sintered body has an electrical resistivity of 10⁸ Ω·cm or lower;
(9) the zirconia sintered body has an achromatic lightness of from 1 to 3.5; and
(10) the zirconia sintered body has a chromatic saturation of from 0 to 2.
   The invention further provides, in another respect thereof for accomplishing the aims described above, an abrasion-resistant member made of the zirconia sintered body described above.
   The invention furthermore provides, in still another respect thereof for accomplishing the aims described above, a bearing ball and an optical-connector member each made of the zirconia sintered body described above.
   For accomplishing the further aims described above, the invention provides:
(11) a process for producing a zirconia sintered body which comprises sintering a raw material mixture comprising a zirconia and a titanium oxide in an oxygen-free atmosphere comprising hydrogen;
(12) a process for producing a zirconia sintered body which comprises sintering a raw material mixture comprising a zirconia and a titanium oxide in an oxygen-free atmosphere comprising nitrogen;
(13) a process for producing a zirconia sintered body which comprises sintering a raw material mixture comprising a zirconia and a titanium oxide in an oxygen-free atmosphere containing water; and
(14) a process for producing a zirconia sintered body which comprises subjecting a rawmaterialmixture comprising a zirconia and a titanium oxide to primary sintering and subjecting the resultant product of the primary sintering to secondary sintering in an oxygen-free inert atmosphere.
(15) In the process for producing a zirconia sintered body as described in (14) above, the oxygen-free inert atmosphere preferably is an atmosphere comprising argon gas.
(16) In the process for producing a zirconia sintered body as described in (14) or (15) above, the primary sintering is preferably conducted in (A) an oxygen-free atmosphere comprising hydrogen, (B) an oxygen-free atmosphere comprising nitrogen, or (C) an oxygen-free atmosphere containing water.
   The invention further provides
(17) a zirconia sintered body produced by the process described in any one of (11) to (16) above.

### BRIEF DESCRIPTION OF THE DRAWINGS

### [Fig. 1]

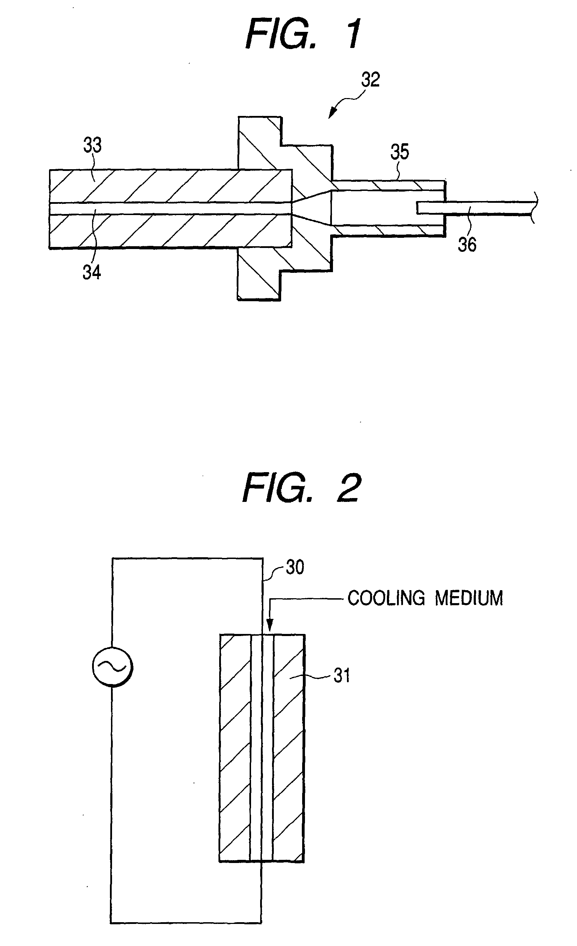

Fig. 1 is a sectional view illustrating one embodiment of the member for optical connectors.

### [Fig. 2]

Fig. 2 is a diagrammatic view illustrating a ferrule which is being produced by working a zirconia sintered body according to the invention by wire-cutting electrical discharge machining.

### [Fig. 3]

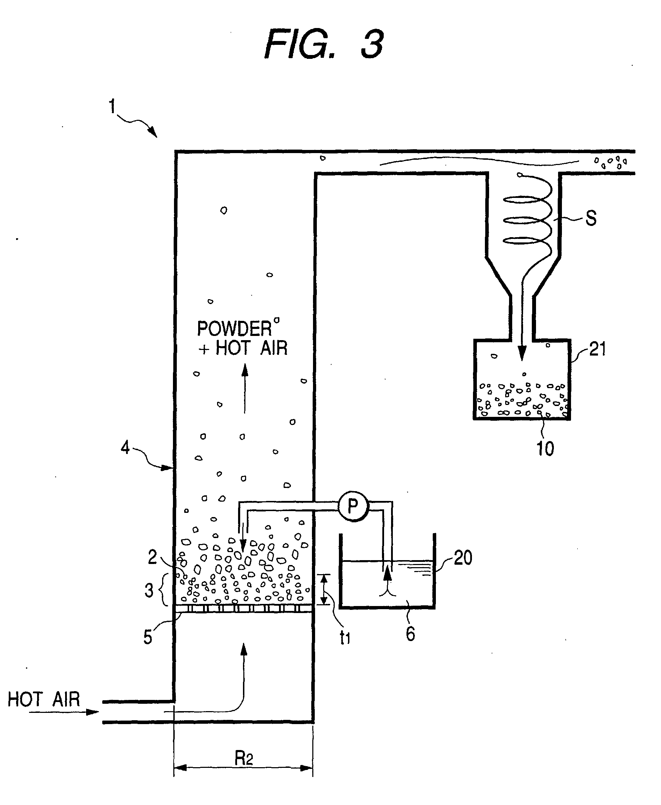

Fig. 3 is a diagrammatic view illustrating an apparatus for raw molding powder production.

### [Fig. 4]

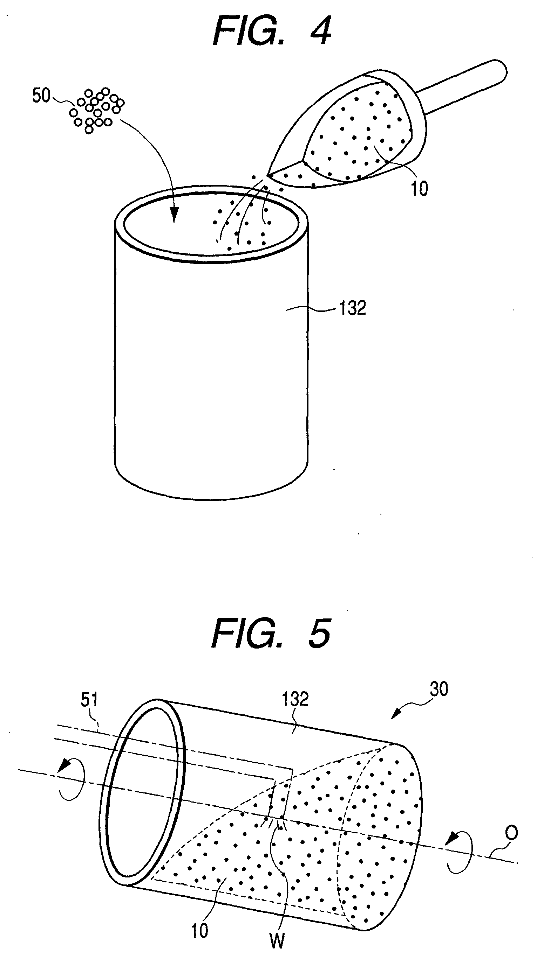

Fig. 4 is a slant view illustrating a granulation vessel in a rolling granulation apparatus.

### [Fig. 5]

Fig. 5 is a slant view showing the principle on which granulation is conducted while rotating the granulation vessel kept inclined.

### [Description of Reference Numerals and Signs]

1 ... hot-air passage, 2 ... drying medium, 3 ... drying medium accumulation, 4 ... hot-air duct, 5 ... medium-holding part, 6 ... slurry, 10 ... raw molding powder, 20 ... slurry tank, 30 ... wire, 31 ... zirconia sintered body, 50 ... molding nuclei, 51 ... water feed pipe, 132 ... granulation vessel, P ... pump, S ... cyclone, W ... water 32 ... optical-connector member, 33 ... ferrule, 34 ... insertion hole, 35 ... back body, 36 ... optical fiber

### DETAILED DESCRIPTION OF THE INVENTION

The zirconia sintered body according to the invention comprises a zirconia and an oxide of titanium (Ti).

The processes for production of a zirconia sintered body according to the invention comprise sintering a rawmaterial mixture comprising a zirconia and a titanium oxide in a specific atmosphere.

Examples of the zirconia include zirconium oxide, a stabilized zirconia, and a partly stabilized zirconia. Examples of the stabilized zirconia include the so-called stabilized zirconias which are a cubic- or tetragonal-system solid solution of a stabilizer, e.g., CaO, MgO, CeO₂, or Y₂O₃, in zirconium oxide. The partly stabilized zirconia is not particularly limited as long as it is a zirconia having a composition containing a stabilizer in an amount insufficient for wholly converting the zirconia into a cubic-system solid solution. As the partly stabilized zirconia can be used either of a precipitation type partly stabilized zirconia and a dispersion type partly stabilized zirconia.

The zirconia in the zirconia sintered body according to the invention usually contains, for example, aluminum oxide as an unavoidable impurity or as an additive added in an amount of 5% by weight or smaller in order to inhibit modification.

In this zirconia sintered body, the zirconia is in the form of particles. The size of these particles of zirconia (hereinafter often referred to as zirconia particles) is preferably 5 µm at the most (5 µm or smaller) , more preferably 3 µm at the most (3 µm or smaller). When the diameter of the zirconia particles is larger than the upper limit, there are cases where the sintered body has a drawback that coarse zirconia particles are apt to serve as starting points for fracture. Consequently, the diameter of the zirconium oxide particles is desirably within the range shown above, although the aims of the invention can be accomplished even when the particle diameter thereof is outside that range.

The diameter of zirconia particles can be determined by mirror-polishing the zirconia sintered body, taking a photograph of a reflection electron composition image (COMPO image) with a scanning electronmicroscope (SEM), and calculating the particle diameter from this COMPO image photograph by the intercept method.

The content of the titanium oxide in this zirconia sintered body is preferably from 10 to 40% by weight, more preferably from 20 to 30% by weight, based on the sum of the zirconia and the titaniumoxide. When the content of the titanium oxide is lower than 10% by weight, there are cases where the sintered body disadvantageously has no electrical conductivity. When the content of the titanium oxide exceeds 40% by weight, there are cases where the zirconia sintered body does not have improved strength.

The zirconia used in the processes for production of a zirconia sintered body according to the invention usually contains, for example, aluminum oxide as an unavoidable impurity or as an additive added in an amount of 2% by weight or smaller in order to inhibit modification.

The titanium oxide may be any of the rutile, anatase, and brookite forms, and may be any of TiO₂, Ti₂O₃, TiO, and other titanium oxides. Also preferred as the titanium oxide in this invention are titanium oxides represented by TiₓO_{y} (wherein x is from 1 to 3 and y is from 1 to 5; the composition is determined with an X-ray photoelectron spectrometer, abbreviated as XPS). This X-ray photoelectron spectrometer is an apparatus for analyzing a solid surface for constituent elements or examining the state of the chemical bonds thereof by X-ray photoelectron spectroscopy (see, for example, *Kiki* Bunseki No Tebiki, 2nd edition, 3rd series, pp.89-100, Apr. 1, 1999, 5th impression, Toko Kagaku Dozin Co., Ltd.).

A feature which should be mentioned specially in the invention is that when a zirconia, in particular a stabilized or partly stabilized zirconia, is compounded with a titanium oxide and this mixture is sintered, then a zirconia sintered body is obtained which not only has improved toughness, suitability for electrical discharge machining, and electrical conductivity which enables the sintered body to show antistatic properties, but also has a coefficient of thermal expansion which is closer to those of metals than that of silicon nitride. The fact that the zirconia sintered body according to the invention has electrical conductivity due to the incorporation of a titanium oxide is crucially important. This is because the ingredients which have hitherto been added as conductivity-imparting agents to zirconia sintered bodies comprising zirconium as a major component for the purpose of imparting electrical conductivity thereto are carbides and nitrides of titanium, tungsten, molybdenum, or the like. In addition, these carbides and nitrides in the structure of the sintered body are present as particles, and the difference in hardness between these particles and the zirconia particles has been causative of difficulties in obtaining precision in a finishing operation for producing truly spherical bearing balls.

In contrast, the titanium oxide in the invention is incorporated not as a stabilizer for the zirconia but as a conductivity-imparting agent, and it actually serves to impart electrical conductivity to the zirconia sintered body. In addition, sufficient precision can be obtained in a bearing ball finishing operation. Consequently, the zirconia sintered body of the invention which contains a titanium oxide has excellent antistatic properties because of its electrical conductivity and is a material capable of being worked by electrical discharge machining and satisfactory in working accuracy.

In zirconias, the oxide of hafnium is already contained in such a state that it cannot be removed therefrom. In the invention, a zirconia containing hafnium oxide as an unavoidable impurity can be used after hafnium oxide is further added and mixed therewith.

In this zirconia sintered body, the titanium oxide is present as particles or in a grain-boundary crystal phase. However, the following should be noted. When sintering is conducted in a nitrogen atmosphere, the titanium oxide is nitrided. In the zirconia sintered body according to the invention, the titanium nitride generated by the nitriding of a titanium oxide is present in inner parts near the surface of the zirconia sintered body and the concentration of this titanium nitride tends to decrease as the depth from the surface increases.

The zirconia sintered body according to the invention has a coefficient of thermal expansion of preferably 6.5x10⁻⁶/°C or higher, more preferably 7.0x10⁻⁶/°C or higher. This zirconia sintered body has a lower coefficient of thermal expansion than zirconia alone. Because of this, when this zirconia sintered body is applied to a member to be used in an atmosphere involving a high temperature, e.g., a high-pressure bearing member or a sliding member such as bearing balls, then this member enables the intended motion, e.g., rotational motion or reciprocating motion, to be conducted stably and highly reliably.

The coefficient of thermal expansion can be determined by the push-bar differential method. A measurement is made in the air atmosphere. In this push-bar differential method, the thermal expansion of a standard quartz sample is compared with the thermal expansion of a test sample to determine the coefficient of thermal expansion of the test sample. The measurement can be made by the linear expansion coefficient testing method for thermomechanical analysis of plastics in accordance with JIS K 7179 (1991). The coefficient of thermal expansion of the zirconia sintered body according to the invention can be regulated by changing the TiO₂ content therein.

The zirconia sintered body according to the invention has a Vickers hardness of preferably 1,250 or lower, more preferably from 950 to 1,200. This Vickers hardness can be measured in accordance with JIS R 1610 (1991), HV20.

The zirconia sintered body according to the invention has a fracture toughness where a lower limit of the fracture toughness is preferably 4 MPam^{0.5} and more preferably 4.5 MPam^{0.5}, and an upper limit of the fracture toughness is preferably 10 MPam^{0.5}. This fracture toughness can be determined in accordance with JIS R 1607 (1990), method IF. The fracture toughness of the zirconia sintered body can be regulated by changing the TiO₂ content and the sintering temperature.

The zirconia sintered body according to the invention has an electrical resistivity of preferably 10⁸ Ω·cm or lower, more preferably 10³ Ω·cm or lower. For determining this electrical resistivity, a test piece having dimensions of a sectional area of 0.3 cm (A) by 0.4 cm (B) and a length of 1.7 cm (L) and having a vapor-deposited gold surface on each end is examined with a tester. From the found resistance value (R), the resistivity can be determined as AxBxR/L. The electrical resistivity of the zirconia sintered body according to the invention can be regulated by changing the amount of the titanium oxide to be incorporated and sintering conditions.

Because the zirconia sintered body according to the invention has hardness, fracture toughness, and electrical resistivity values within the respective ranges shown above and because it has a lower coefficient of thermal expansion than zirconia itself, the sintered body is suitable for use as, for example, bearing balls.

When used, for example, in an electronic device such as a hard disk drive, the bearing balls made of this zirconia sintered body do not arouse the troubles attributable to static buildup.

In general, a bearing in which the constituent rotating shaft-holding part and/or ball-holding part is made of a bearing steel, e.g., SUJ2, as provided for in JIS G 4805 can realize reliable high-speed rotation. Zirconia itself has a coefficient of linear thermal expansion close to those of bearing steels. For example, when a motor is operated at a high rotational speed, the bearing itself heats up to a high temperature due to sliding. In case where the difference between the coefficient of linear thermal expansion of the bearing balls and the coefficient of linear thermal expansion of the material constituting the rotating shaft member or ball-holding part is too large, thermal distortion (asynchronous deflection) occurs and, hence, reliable and stable high-speed rotation is difficult to realize. Adverse influences of this thermal distortion can be diminished by using bearing balls made of a zirconia sintered body which comprises a zirconia and a titanium oxide and has a coefficient of linear thermal expansion close to those of bearing steels, as in the invention.

Examples of machines or apparatus having a motor in which a bearing having bearing balls made of the zirconia sintered body according to the invention can be mounted include various machines and apparatus involving a rotational motion, such as magnetic recording apparatus having a hard-disk drive, optical disk devices, DVDs, and various game machines and general motor-equipped machine tools such as lathes.

Since the zirconia sintered body according to the invention has an electrical resistivity within the range shown above, it is less apt to be electrostatically charged and can be worked by electrical discharge machining. Because this zirconia sintered body is less apt to be electrostatically charged, it brings about the following effect. For example, when this zirconia sintered body is used for producing bearing balls therefrom, the bearing balls which are being produced do not suffer troubles aroused by static buildup, such as lodging during conveyance and adhesion to the apparatus, and production with smooth handling can be realized. Furthermore, since this zirconia sintered body can be worked by electrical discharge machining, cutting in the inner wall surface in a cylindrical shape, for example, can be easily conducted with high accuracy by electrical discharge machining.

In the zirconia sinteredbody according to the invention, at least the surface thereof has an appearance lightness VS, which is the lightness according to the color specification method as provided for in JIS Z 8721, of preferably from 1 to 3.5. Furthermore, in the zirconia sintered body according to the invention, at least the surface thereof has an appearance saturation CS, which is the saturation according to the color specification method as provided for in JIS Z 8721, of preferably from 0 to 2. This zirconia sintered body more preferably has such a color tone that the appearance lightness VS is from 1 to 3.5 and the appearance saturation CS is from 0 to 2. When the zirconia sintered body has such lightness and saturation values, it is easy to find out defectives with an automatic appearance inspection machine. The reasons for this are as follows. Defects, such as pores and tears, present in sintered bodies appear as bright spots or lines. Because of this, when a sintered body is inspected by an automatic appearance inspection machine, the defects are apt to form an insufficient contrast with the background. There has hence been a problem that the discrimination accuracy cannot be heightened. In contrast, in the zirconia sintered body according to the invention, defects such as pores and tears form an enhanced contrast with the background because of the lightness and saturation of the sintered body and can hence be easily found out. Consequently, the zirconia sintered body having lightness and saturation values within the respective ranges shown above passes through screening as a product free from defects such as pores or tears. In other words, the zirconia sintered body thus obtained through screening, which has the lightness and saturation shown above, has few harmful defects and hence has excellent quality.

The zirconia sintered body according to the invention can be obtained by mixing the zirconia with a titanium oxide and optionally with a stabilizer and a sinting aid to prepare a raw material mixture, molding the mixture, and then sintering the molding in a reducing atmosphere or an atmosphere comprising hydrogen and nitrogen preferably at from 1,300 to 1,700°C.

The zirconia to be used for obtaining the zirconia sintered body according to the invention preferably is a powdery one having a particle diameter of 1 µm or smaller, preferably 0.7 µm or smaller, more preferably from 0.5 to 0.2 µm. The titanium oxide, to be used is preferably one having a particle diameter of 2 µm or smaller. In the case where a zirconia powder or a powder of a titanium oxide which each has a particle size larger than the upper limit shown above is used, it is recommended that the particles should be further pulverized beforehand.

The zirconia sintered body according to the invention can be formed, for example, into various abrasion-resistant members. In particular, since this zirconia sintered body has electrical conductivity because it contains a titanium oxide, it is suitable for electrical discharge machining. Namely, by working the zirconia sintered body by electrical discharge machining, it can be formed into abrasion-resistant members having various shapes.

General techniques of electrical discharge machining can be understood, for example, from the explanation given in (Shin-han) Kikai *Kôgaku Binran B2 Kakô-gaku-Kakô-kiki* (11th impression, published on Apr. 20, 1998, sold by Maruzen Co., Ltd.), B2, p.152 or from the explanation given in *Kikai Kôgaku Poketto Bukku* (20th impression of 2nd edition, published on Jun. 20, 1982 by Ohm-sha, Ltd.), pp.5-99. Electrical discharge machining is effective in finishing the work with high working accuracy. Namely, electrical discharge machining is suitable for precision working. Since the zirconia sintered body according to the invention has electrical conductivity, it can be worked by electrical discharge machining into precision members.

Examples of precision members which can be formed from the zirconia sintered body according to the invention include members for optical connectors, e.g., ferrules. Specific examples of ferrules are described, for example, in JP-A-2000-147320 and JP-A-11-52178. Fig. 1 shows an optical-connector member employing a ferrule. In Fig. 1, numeral 32 denotes an optical-connector member, 33 a ferrule, 34 an insertion hole for inserting an optical fiber 36 thereinto, and 35 a back body.

A ferrule is utilized, for example, as a socket for an optical-fiber joint as described, for example, in *Rikôgaku* Jiten (1st impression of 1st edition, published on Mar. 28, 1996 by The Nikkan Kogyo Shinbun, Ltd.), p.1263. For preventing an optical-fiber joint from suffering a decrease in gain due to corrosion, it is important that the ferrule should have dimensional accuracy and have the precision of coincidence of the center of the inner diameter with that of the outer diameter (concentricity). Because of this, working into a ferrule necessitates a prudent contrivance. For example, wire-cutting electrical discharge machining can be used for working the zirconia sintered body according to the invention, as shown in Fig. 2, to produce a ferrule at low cost with satisfactory accuracy. In Fig. 2, numeral 30 denotes a wire and 31 denotes a zirconia sintered body as a work to be worked into a ferrule.

The zirconia sintered body according to the invention can be formed also into bearing balls. The bearing balls made of the zirconia sintered body according to the invention have excellent abrasion resistance, i.e., retain a bearing function over long. These bearing balls are not deprived of their bearing function by the heat resulting from high-speed rotation because they have a high coefficient of thermal expansion. Furthermore, since this zirconia sintered body has excellent antistatic properties, the ball bearings being produced are prevented frombeing electrostatically charged and lodging in a conveyance line. Namely, smooth continuous production is possible. The production of bearing balls will be explained below with respect to the case in which a zirconia and a titanium oxide are used as raw materials. However, processes for producing bearing balls should not be construed as being limited to the following process.

A zirconia is mixed with a titanium oxide and a necessary sintering aid to prepare a raw molding material powder. As shown in Fig. 3, the starting materials for molding are charged into an apparatus for raw molding powder preparation for use in a step for raw molding powder preparation to prepare a raw molding powder. This apparatus for raw molding powder preparation shown in Fig. 3 has the same constitution as the apparatus shown in the Fig. 7 in JP-A-2001-181051 and in the Fig. 7 in JP-A-2001-146482.

In short, the constitution of the apparatus for raw molding powder preparation shown in Fig. 3 is as follows. The apparatus has a hot-air passage 1 constituted of components including a hot-air duct 4 vertically installed. This hot-air duct 4 has, disposed in a middle part thereof, a medium-holding part 5 constituted of a gas-permeable material which allows hot air to pass therethrough but prevents a drying medium 2 from passing therethrough, such as, e.g., a net or perforated plate. On the medium-holding part 5 has accumulated a layer of a drying medium 2 comprising ceramic spheres to form a drying medium accumulation 3.

A slurry 6 obtained by adding an aqueous medium to a zirconia powder and a titania powder, which are starting materials for the zirconia sintered body according to the invention, and wet-mixing these ingredients is stored in a slurry tank 20. On the other hand, hot air is forcibly introduced into the apparatus for raw molding powder production from under the drying medium accumulation 3, whereby the drying medium 2 comes to fly around over the medium-holding part 5. The slurry 6 which has been pumped up from the slurry tank 20 with a pump P is fed by dropping it from over the flying drying medium 2. The slurry 6 thus fed by dropping is dried with the hot air and, simultaneously therewith, adhere to the surface of the drying medium 2 to form a layer of particle aggregates on the surface of the drying medium 2. Since the drying medium 2 is flying around by the action of the hot air, the medium particles collide and hit against one another. As a result of the mutual collisions and hitting of the drying medium 2, the particle aggregate layer deposited on the surface of the drying medium 2 is crushed or pulverized to thereby form raw molding powder particles. As shown in Fig. 3, these raw molding powder particles are conveyed with a hot air stream and reach a recovery part 21 through a cyclone S. Thus, the powder particles are recovered as a raw molding powder 10.

In preparing rawmolding powder particles, the preferred average particle diameter of each of the zirconia, titanium oxide, and necessary sintering aid, the temperature and flow rate of the hot air to be introduced into the apparatus for raw molding powder particle preparation, and other factors can be suitably determined with reference to the contents of the patent documents shown above.

The raw molding powder obtained is molded into spheres by the rolling granulation method. For example, the raw molding powder 10 is introduced into a granulation vessel 132 together with molding nuclei 50 as shown in Fig. 4. This granulation vessel 132 is held so that the axis thereof inclines at a given angle, and the granulation vessel 132 in this state is rotated at a given peripheral speed while supplying water to the contents of the granulation vessel 132 by, e.g., spraying. As a result, the molding nuclei 50 roll on the raw molding powder, whereby particles of the raw molding powder adhere to the outer surface of each molding nucleus 50 and aggregate to form a spherical molding. In Fig. 5, numeral 51 denotes a water feed pipe for feeding water W. This step in which spherical moldings are formed is often referred to as a rolling granulation step.

Operating conditions for the rolling granulation apparatus (e.g., the apparatus 30 shown in Fig. 5) to be used in the rolling granulation method can be easily determined by reference to explanations given in, e.g., JP-A-2001-181051 and JP-A-2001-146482. For example, the rotational speed of the granulation vessel is regulated to from 10 to 200 rpm and the amount of water W to be fed is regulated so that the spherical moldings to be finally obtained have a water content of, for example, from 10 to 20% by weight.

By employing this rolling granulation method, high-density spherical moldings having a diameter of, e.g., up to about 10 mm can be produced extremely efficiently.

Spherical moldings can be produced by a method other than the rolling granulation method described above. For example, a spherical molding can be obtained by the die pressing method illustrated in the Fig. 19 (a) and (b) in JP-A-2001-181051. In this method, a raw molding powder is compacted into a spherical shape with upper and lower press punches which are inserted into the cavity of a molding die, whereby a spherical molding is obtained. The upper and lower press punches each have a semi-spherical recess on their sides facing each other. A raw molding powder is charged into the semi-spherical recesses and compacted. However, since the spherical molding thus obtained has a finlike unnecessary part, this unnecessary part is removed by, e.g., polishing before or after sintering. Another method which can be used for producing spherical moldings is the cold isostatic pressing (CIP) method. Specifically, a spherical compact provisionally formed by the die pressing method is placed in a sealed rubber tube and a hydrostatic pressure is applied thereto to conduct isostatic press forming. In the case where one cold isostatic pressing operation does not result in a sufficient improvement in the density of the spherical compact, use may be made of the so-called cycle CIP method, in which the cold isostatic pressing is repeatedly conducted.

Besides the methods described above, examples of processes for producing spherical moldings include: a method which comprises dispersing a raw molding powder in a thermoplastic binder to obtain a slurry, causing the slurry to freely fall from a nozzle and form spherical droplets based on surface tension, and cooling and drying the droplets in air (see, for example, JP-A-63-229137); and a method in which a slurry comprising a rawmolding powder, a monomer or prepolymer, and a dispersion medium is dispersed as droplets in a liquid immiscible with the slurry, and the monomer or prepolymer in the resultant dispersion is polymerized to thereby obtain spherical moldings (see, for example, JP-A-8-52712).

The spherical moldings thus obtained are sintered to thereby obtain unfinished bearing balls. The sintering of the spherical moldings can be conducted in two steps, i.e., primary sintering and secondary sintering. In the primary sintering, the moldings are sintered in a non-oxidizing atmosphere comprising hydrogen and having a pressure of from 1 to 10 atm, e.g., a hydrogen/nitrogen mixed gas atmosphere, at a temperature of 1,600°C or lower desirably in such a manner that the sintered body to be obtained through this primary sintering has a relative density of 78% or higher, preferably 90% or higher, based on the theoretical density thereof. When the density resulting from the primary sintering is lower than 78%, there are cases where many defects such as pores remain after secondary sintering. The secondary sintering can be conducted in a non-oxidizing atmosphere comprising argon and having a pressure of from 10 to 2,000 atm at a temperature of from 1,300 to 1,700°C. In case where the pressure during this sintering is lower than 10 atm, many pores may remain. Pressures exceeding 2,000 atm are uneconomical in that even when such a high pressure is used, this does not bring about an enhanced technical effect which compensates for the high pressure. When the sintering temperature is lower than 1,300°C, there are cases where defects such as pores and tears cannot be eliminated, resulting in insufficient strength. However, it is possible to omit the primary sintering to conduct one-step sintering, as long as this sintering is performed under conditions corresponding to those for the secondary sintering and is capable of attaining sufficient densification, impartation of electrical conductivity, and diminution of defects and the like.

The surface of the sintered body thus obtained, i.e., unfinished bearing balls, is precisely polished to give bearing balls.

The titanium oxide used in the processes for production of a zirconia sintered body according to the invention, preferably is one having a particle diameter of a 2 µm or smaller. In case where a zirconia powder or a powder of the titanium oxide which each has a larger size than the upper limit shown above is used, it is recommended that the particles should be further pulverized beforehand.

The raw material mixture to be subjected to sintering may be a mixture of a powder of the zirconia and a powder of the titanium oxide or may be a slurry containing these powders. The zirconia powder and the titanium oxide powder generally are calcined powders obtained through heating at preferably about from 700 to 1,100°C, more preferably about from 800 to 1,000°C. However, the raw materials to be used are not limited to such calcined powders and may be uncalcined raw material powders. In the case of conducting calcination, the raw materials may be separately calcined. Alternatively, the raw materials may be mixed, subsequently calcined together, and then subjected to size control.

The raw material mixture may contain a sintering aid. As this sintering aid, any sintering aid for general use can be employed without particular limitations as long as this does not defeat the aims of the invention. Preferred examples thereof include rare-earth element compounds such as yttrium oxide and metal oxides such as magnesium oxide. Although the amount of the sintering aid to be added is not particularly limited, it is preferably 15% by mole or smaller based on all ingredients.

Sintering is conducted in a specific atmosphere. Examples of the atmosphere include the following three atmospheres: (1) an oxygen-free atmosphere comprising hydrogen (hereinafter sometimes referred to as a hydrogen-containing oxygen-free atmosphere); (2) an oxygen-free atmosphere comprising nitrogen (hereinafter sometimes referred to as a nitrogen-containing oxygen-free atmosphere);and (3) an oxygen-free atmosphere containing water, i.e., water vapor (hereinafter sometimes referred to as a water vapor-containing oxygen-free atmosphere). The term "oxygen-free atmosphere" as used herein should be construed as meaning an atmosphere containing substantially no oxygen. A matter common to these three atmospheres is that substantially no oxygen is contained therein. Consequently, these three atmospheres are hereinafter sometimes referred to collectively as an oxygen-free atmosphere. This oxygen-free atmosphere can be realized by evacuating the space where sintering is to be conducted, e.g., the inner space of a sintering furnace, by means of an appropriate evacuation unit and introducing hydrogen, nitrogen, water vapor, or the like into the space according to need. The term atmosphere herein means the gas surrounding the work to be sintered.

The hydrogen-containing oxygen-free atmosphere (1) may be a gas consisting of 100% hydrogen or may be a hydrogen-containing mixed gas comprising hydrogen and one or more other gases. When the raw material mixture is sintered in the hydrogen-containing oxygen-free atmosphere, the zirconia sintered body obtained has a black surface although the reason for this is unclear. The black color of this zirconia sintered body can be determined based on a visual comparison between the appearance color of a polished surface of the zirconia sintered body and a standard color chart produced in accordance with JIS Z 8721. Namely, the zirconia sintered body can be judged black when it has a lightness of from 1 to 3.5.

In the case where the hydrogen-containing oxygen-free atmosphere is a hydrogen-containing mixed gas, the content of hydrogen in this hydrogen-containing mixed gas is preferably at least 25% (25% or higher), more preferably at least 50% (50% or higher). When the hydrogen content in the hydrogen-containing mixed gas is lower than the lower limit, there are cases where the zirconia sintered body obtained is not black.

Examples of the other gas(es) contained in the hydrogen-containing mixed gas include inert gases such as argon, water poor, and nitrogen gas.

In the case where the other gas is nitrogen gas, this hydrogen-containing mixed gas can be regarded also as a nitrogen-containing oxygen-free atmosphere. In the case where the other gas is water vapor, this hydrogen-containing mixed gas can be regarded also as a water vapor-containing oxygen-free atmosphere.

The nitrogen-containing oxygen-free atmosphere (2) may be a gas consisting of 100% nitrogen or may be a nitrogen-containing mixed gas comprising nitrogen and one or more other gases. When the raw material mixture is sintered in the nitrogen-containing oxygen-free atmosphere, a dense zirconia sintered body having an improved density is obtained.

Examples of the other gas(es) contained in the nitrogen-containing mixed gas include inert gases such as argon, water vapor, and hydrogen gas.

In the case where the other gas is hydrogen gas, this nitrogen-containing mixed gas can be regarded also as a hydrogen-containing oxygen-free atmosphere. In the case where the other gas is water vapor, this nitrogen-containing mixed gas can be regarded also as a water vapor-containing oxygen-free atmosphere.

The water vapor-containing oxygen-free atmosphere (3) is a gas atmosphere which contains water vapor but contains no oxygen. This atmosphere contains one or more other gases, examples of which include hydrogen gas, nitrogen gas, and inert gases such as argon. This water vapor-containing oxygen-free atmosphere can be obtained by introducing one or more gases selected from hydrogen gas, nitrogen gas, argon gas, and the like into water kept at from 20 to 70°C to pass the gases through the water. When the raw material mixture is sintered in the water vapor-containing oxygen-free atmosphere, a dense zirconia sintered body having an improved density is obtained.

In the processes for zirconia sintered body-production of the invention, the raw material mixture is sintered in any of the specific atmospheres described above.

The sintering operation may be conducted in one step or in two steps consisting of primary sintering and secondary sintering.

In the case of one-step sintering, the sintering temperature is preferably from 1,300 to 1,700°C, more preferably from 1,300 to 1,400°C. The pressure of the specific atmosphere during the sintering is preferably from 1 to 10 atm, more preferably from 1 to 2 atm.

In the case where two-step sintering is conducted in order to obtain a black zirconia sintered body, a selection of atmosphere is important. Namely, (a) when a hydrogen-containing oxygen-free atmosphere is selected for primary sintering, the atmosphere to be used for secondary sintering is not particularly limited; and (b) when an oxygen-free inert atmosphere is selected as the atmosphere for secondary sintering, the atmosphere to be used for primary sintering is not particularly limited.

More specifically, when a hydrogen-containing oxygen-free atmosphere is selected as the atmosphere for primary sintering and/or an oxygen-free inert atmosphere, in particular an atmosphere comprising argon gas, is selected as the atmosphere for secondary sintering, then a black zirconia sintered body can be obtained. When an oxygen-free inert atmosphere is selected as the atmosphere for secondary sintering and a nitrogen-containing oxygen-free atmosphere or a water-containing oxygen-free atmosphere is selected as the atmosphere for primary sintering, then a black and dense zirconia sintered body can be obtained. Those inert atmospheres each are an atmosphere of one or more gases which do not react with zirconia. Since nitrogen gas may react with zirconia to yield zirconia nitride, those inert atmospheres contain no nitrogen.

In primary sintering, the pressure of the atmosphere is preferably from 1 to 10 atm and the sintering temperature is preferably from 1,300 to 1,700°C.

Whichever atmosphere is employed, the primary sintering in the case of two-step sintering is desirably conducted in such a manner that the sintered body to be obtained through this primary sintering has a relative density of at least 78% (78% or higher), preferably at least 90% (90% or higher), based on the theoretical density thereof. When the relative density of the sintered body obtained through the primary sintering is lower than 78% based on the theoretical density thereof, there are cases where many defects such as pores are apt to remain after secondary sintering. The secondary sintering can be conducted in an oxygen-free inert atmosphere containing no nitrogen, e.g., a non-oxidizing atmosphere comprising argon and having a pressure of from 10 to 2,000 atm, at a temperature of from 1,400 to 1,700°C. In case where the pressure during this sintering is lower than 10 atm, many pores may remain. Pressures exceeding 2,000 atm are uneconomical in that even when such a high pressure is used, this does not bring about an enhanced technical effect which compensates for the high pressure. When the sintering temperature is lower than 1,300°C, there are cases where defects such as pores and tears cannot be eliminated, resulting in insufficient strength. Two-step sintering can yield a zirconia sintered body which is denser and has a higher density than zirconia sintered bodies obtained by one-step sintering.

By the processes of the invention, a zirconia sintered body which is evenly black, a zirconia sintered body which is dense and has a high density where a relative density is 92 % or more, or a zirconia sintered body which is evenly black and dense and has a high density where a relative density is 92 % or more can be obtained according to a selection of sintering atmosphere.

Furthermore, according to the processes of the invention, a zirconia sintered body having a high hardness and high toughness and having a lower coefficient of thermal expansion than sintered bodies of a zirconia alone can be obtained because a zirconia and a titanium oxide are used as raw material for the zirconia sintered body.

### EXAMPLES

Examples of the invention will be given below.

### (EXAMPLES 1 TO 8)

Into a resin pot were introduced a Y₂O₃-containing partly stabilized zirconia powder (manufactured by Daiichi Kigenso Kagaku Kogyo Co., Ltd.; product name, HSY), a titanium oxide (manufactured by Toho Titanium Company, Ltd.; product name, High-Purity Titanium) , the amount of which in terms of proportion to the sum of the titanium oxide and the partly stabilized zirconia is shown in Table 1, and pure water together with pebbles. The amount of the pure water was two times by weight the sum of the partly stabilized zirconia and the titanium oxide. These ingredients were wet-mixed over 16 hours. The resultant slurry was poured into a plastic container and then dried with heating at 60°C for 10 hours. The solid obtained was pulverized to produce a raw molding powder. A raw molding powder could be produced also by charging the ingredients into an attritor mixer, wet-mixing these in the mixer for 5 hours, and then drying the mixture with a fluidization type dryer.

This raw molding powder was subjected to isostatic press forming at a pressure of 14.71x10⁴ kPa (SI unit value converted from 1.5 ton/cm²) to obtain a molding. This molding was subjected to primary sintering at 1,380°C in a hydrogen/nitrogen mixed gas atmosphere and then to secondary sintering at 1,450°C in an argon atmosphere having a pressure of 1,500 atm. Thus, samples necessary for the following tests were produced. The samples for each Example were subjected to the following evaluation tests. The results of these evaluation tests are shown in Table 1.

### <Vickers Hardness>

Vickers hardness was determined under a load of 19.61 N by the method as provided for in JIS R 1610 (1991).

### <Fracture Toughness>

Fracture toughness was measured by the method IF as provided for in JIS R 1607 (1990).

### <Resistivity>

Resistivity was measured with a tester (manufactured by Takeda Riken; Type TR 6824).

### <Coefficient of Thermal Expansion>

The coefficient of thermal expansion was determined by the push-bar differential method based on a comparison between the thermal expansion of a standard quartz sample and the thermal expansion of a test sample. The measurement was made in the air atmosphere.

### <Saturation>

The appearance color of a zirconia sintered body was judged in accordance with JIS Z 8721.

### (COMPARATIVE EXAMPLE 1)

A raw molding powder was obtained in the same manner as in Example 1, except that the titanium oxide was not incorporated. Using this raw molding powder, samples necessary for the same tests as in the Examples given above were produced. These samples were subjected to the same evaluation tests as in Example 1. The results of these evaluation tests are shown in Table 1.

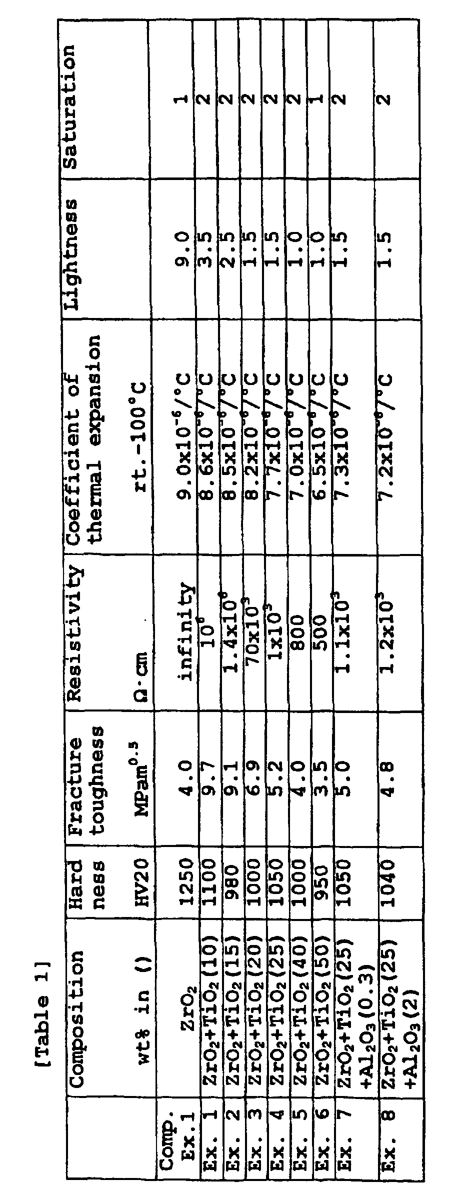

### (EXAMPLE 9)

A raw molding powder having the same composition as in Example 8, which consisted of zirconia, titania, and alumina, was prepared with an attritor. This raw molding powder was subjected to rolling granulation to produce spherical moldings having a diameter of about 2 mm in a total amount of 40 kg. These spherical moldings were subjected to primary sintering in a hydrogen/nitrogen mixed gas atmosphere under the conditions of 1 atm and 1,380°C and then to secondary sintering in an argon atmosphere under the conditions of 1,500 atm and 1,450°C. The surface of the balls thus sintered was subjected to precision polishing so as to result in a sphericity of 0.05 µm and an arithmetic mean roughness of 0.002 µm. The balls obtained had an average diameter of 1.5875x10⁻³ m (1/16 inch). During this ball-working operation, the balls obtained suffered no static buildup and could be smoothly handled.

Furthermore, many of the balls were allowed to flow through a gutter inclined at an angle of about 30 degrees and to fall into a vessel made of polypropylene. As a result, the balls neither lodged electrostatically in the gutter nor adhered electrostatically to the inner wall of the vessel.

### (COMPARATIVE EXAMPLE 2)

The raw molding powder prepared in Comparative Example 1, which consisted of zirconia, was subjected to rolling granulation to produce spherical moldings having a diameter of about 2 mm. These spherical moldings were sintered in a 1,400°C furnace in the air atmosphere to obtain balls. The surface of the balls thus sintered was subjected to precision polishing so as to result in a sphericity of 0.08 µm and an arithmeticmean roughness of 0.012 µm. During this ball-working operation, the balls obtained were electrostatically charged and scattered, and smooth handling was hence difficult. Furthermore, many of the balls were allowed to flow through a gutter inclined at an angle of about 30 degrees and to fall into a vessel made of polypropylene. As a result, ball lodging occurred in the gutter due to static buildup and ball adhesion to the inner wall of the vessel occurred due to static buildup.

The invention can provide a zirconia sintered body which has a well balanced combination of excellent hardness and excellent fracture toughness andhas electrical conductivity and a low coefficient of thermal expansion. The invention can further provide a zirconia sintered body which has excellent antistatic properties, can be easily worked by electrical discharge machining, and has a well balanced combination of excellent hardness and excellent fracture toughness. The invention can furthermore provide a zirconia sintered body which does not readily break even when exposed to a high-speed motion and which is less apt to be impaired in dimensional accuracy.

The invention can still further provide an abrasion-resistant member, optical-connector member, and bearing ball which each do not electrostatically lodge in a conveyance line during the production thereof, can be easily finished by electrical discharge machining so as to have high surface accuracy, and have excellent abrasion resistance and a long life.

### (EXAMPLE 10 AND COMPARATIVE EXAMPLE 3)

Into a resin pot were introduced a Y₂O₃-containing partly stabilized zirconia powder (manufactured by Daiichi Kigenso Kagaku Kogyo Co., Ltd.; product name, HSY) in an amount of 70% by weight, a titanium oxide (manufactured by Toho Titanium Company, Ltd.; product name, High-Purity Titanium) in an amount of 30% by weight based on the sum of the partly stabilized zirconia and the titanium oxide, and pure water together with pebbles. The amount of the pure water was two times by weight the sum of the partly stabilized zirconia and the titanium oxide. These ingredients were wet-mixed over 16 hours. The resultant slurry was poured into a plastic container and then dried with heating at 60°C for 10 hours. The solid obtained was pulverized to produce a raw molding powder. A raw molding powder could be produced also by charging the ingredients into an attritor mixer, wet-mixing these in the mixer for 5 hours, and then drying the mixture with a fluidization type dryer. This raw molding powder is the raw material mixture in the invention.

This raw molding powder was subjected to press forming at a pressure of 14.71x10⁴ kPa (SI unit value converted from 1.5 ton/cm²) to produce a sample. This sample was sintered in each of the sintering atmospheres shown in Table 2 at the sintering temperature shown in Table 2. The resultant sintered bodies were examined for density. The sintering conditions and the densities of the sintered bodies are shown in Table 2.

In Table 2, the atmosphere indicated by "H₂" in the column "Surrounding gas" and by "dry" in the column "Water vapor atmosphere" means an atmosphere of dry 100% hydrogen gas. Likewise, the atmosphere indicated by "H₂" and "dew point 40°C" means a water vapor-containing oxygen-free hydrogen atmosphere obtained by passing dry 100% hydrogen gas through 40°C water. The atmosphere indicated by "3H₂+N₂" and "dry" means a dry atmosphere consisting of a mixture of hydrogen gas and nitrogen gas in a ratio of 3:1 by volume (standard state) . The atmosphere indicated by "3H₂+N₂" and by "dew point 20°C", "dew point 40°C", or "dew point 70°C" means a water vapor-containing oxygen-free atmosphere obtained by passing a mixed gas composed of hydrogen gas and nitrogen gas in a ratio of 3:1 by volume (standard state) through water kept at 20°C, 40°C, or 70°C, respectively. The atmosphere indicated by "H₂+N₂" and "dew point 40°C" means a water vapor-containing oxygen-free atmosphere obtained by passing a mixed gas composed of hydrogen gas and nitrogen gas in a ratio of 1:1 by volume (standard state) through water kept at 40°C. Furthermore, "atmospheric air" means that the sintering was conducted in the air.

Each blank in the column "Secondary-sintering atmosphere" means that secondary sintering was omitted and primary sintering alone was conducted. In the column "Density of zirconia sinteredbody", the density of each zirconia sintered body which had undergone secondary sintering is shown in parenthesis.

The color of each zirconia sintered body was judged based on a visual comparison between the appearance color of a polished surface of the zirconia sintered body and a standard color chart produced in accordance with JIS Z 8721.

The example in which sintering was conducted using the atmospheric air as a sintering atmosphere is Comparative Example 3.

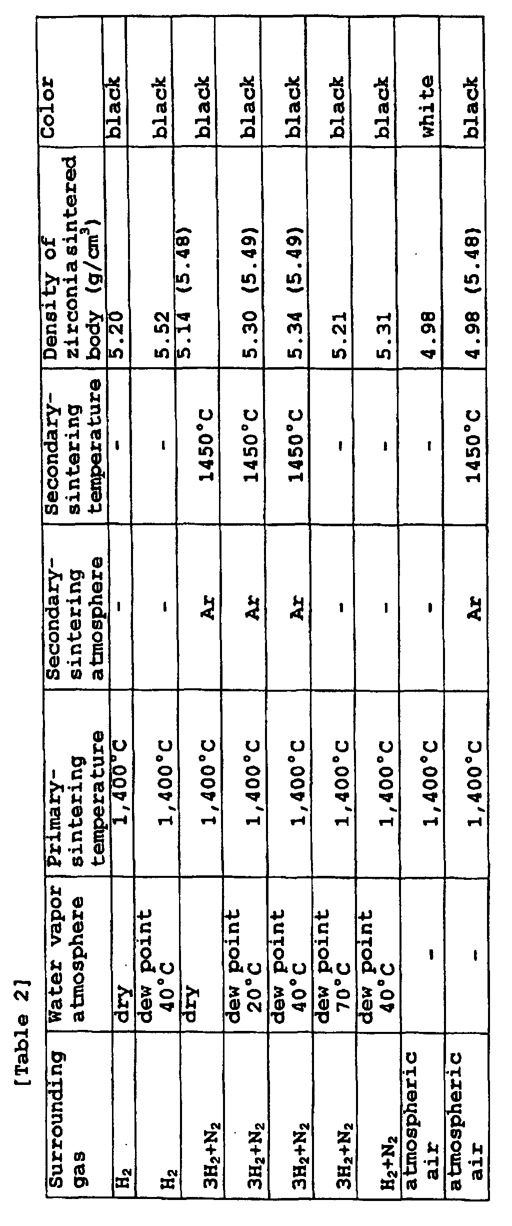

The results given in Table 2 show the following. The zirconia sintered body obtained by primary sintering in the atmospheric air was white, whereas the zirconia sintered bodys obtained through primary sintering in a hydrogen-containing oxygen-free atmosphere had an even black color. Even when primary sintering had been conducted in the atmospheric air, use of an argon atmosphere for secondary sintering resulted in a black sintered body. In this case, however, electrical conductivity was not imparted.

### (EXAMPLE 11)

A raw molding powder having the same composition as in Example 4, which consisted of zirconia and titania, was prepared in the same manner as in Example 1. This raw molding powder was subjected to rolling granulation to produce spherical moldings having a diameter of about 2 mm in a total amount of 40 kg. These spherical moldings were subjected to primary sintering in a hydrogen/nitrogen mixed gas atmosphere under the conditions of 1 atmand 1,360°C and then to secondary sintering in an argon atmosphere under the conditions of 1,500 atm and 1,450°C. The surface of the balls thus sintered was subjected to precision polishing so as to result in a sphericity of 0.05 µm and an arithmetic mean roughness of 0.002 µm. The balls obtained had an average diameter of 1.5875x10⁻³ m (1/16 inch). During this ball-working operation, the balls obtained suffered no static buildup and could be smoothly handled.

Furthermore, many of the balls were allowed to flow through a gutter inclined at an angle of about 30 degrees and to fall into a vessel made of polypropylene. As a result, the balls neither lodged electrostatically in the gutter nor adhered electrostatically to the inner wall of the vessel.

### (COMPARATIVE EXAMPLE 4)

The raw molding powder prepared in Comparative Example 1, which consisted of zirconia, was prepared in the same manner as in Example 1. This raw molding powder was subjected to rolling granulation to produce spherical moldings having a diameter of about 2 mm. These spherical moldings were sintered in the same manner as in Example 11 to obtain balls. The surface of the balls thus sintered was subjected to precision polishing so as to result in a sphericity of 0.08 µm and an arithmetic mean roughness of 0.012 µm. During this ball-working operation, the balls obtained were electrostatically charged and scattered, and smooth handling was hence impossible. Furthermore, many of the balls were allowed to flow through a gutter inclined at an angle of about 30 degrees and to fall into a vessel made of polypropylene. As a result, ball lodging occurred in the gutter due to static buildup and ball adhesion to the inner wall of the vessel occurred due to static buildup.

The invention can provide a process for producing a zirconia sintered body which is evenly black. The invention can further provide a process for producing a dense zirconia sintered body having a high density. The invention can furthermore provide a process for producing a zirconia sintered body which not only has a high density and is dense, but also has been evenly colored black to facilitate the discrimination of defectives with an automatic appearance inspection machine. The invention can still further provide a zirconia sintered body which has been evenly colored black and has a dense structure.

Furthermore, the invention can provide a process for producing a zirconia sintered body which has been evenly colored black, has a well balanced combination of excellent hardness and excellent toughness, and has electrical conductivity and a low coefficient of thermal expansion. The invention can further provide a dense zirconia sintered body which has excellent antistatic properties, can be easily worked by electrical discharge machining, has a well balanced combination of excellent hardness and excellent toughness, and has been colored black. The invention can furthermore provide a zirconia sintered body which does not readily break even when exposed to a high-speed motion and which is less apt to be impaired in dimensional accuracy.

The invention can still further provide a zirconia sintered body suitable for use as an abrasion-resistant member, optical-connector member, and bearing ball which each do not electrostatically lodge in a conveyance line during the production thereof, can be easily finished by electrical discharge machining so as to have high surface accuracy, and have excellent abrasion resistance and a long life.

This application is based on Japanese Patent application JP 2002-010490, filed January 18, 2002, and Japanese Patent application JP 2002-010492, filed January 18, 2002, the entire contents of those are hereby incorporated by reference, the same as if set forth at length.

## Claims

1. A zirconia sintered body comprising a zirconia and a titanium oxide.

2. The zirconia sintered body according to claim 1, wherein a content of the titanium oxide is from 10 to 40% by weight based on a sum of the zirconia and the titanium oxide.

3. The zirconia sintered body according to claim 1, wherein a content of the titanium oxide is from 20 to 30% by weight based on a sum of the zirconia and the titanium oxide.

4. The zirconia sintered body according to claim 1, which is produced by sintering a mixture comprising a zirconia and a titanium oxide, a content of the titanium oxide in the mixture being 10 to 40% by weight based on a sum of the zirconia and the titanium oxide.

5. The zirconia sintered body according to claim 1, which further comprises a titanium nitride.

6. The zirconia sintered body according to any one of claims 1 to 5, wherein the titanium oxide is TiₓO_{y} (wherein x is from 1 to 3 and y is from 1 to 5).

7. The zirconia sintered body according to any one of claims 1 to 6, wherein the titanium oxide is contained as a conductivity-imparting agent.

8. The zirconia sintered body according to any one of claims 1 to 7, wherein the zirconia is a partly stabilized zirconia.

9. The zirconia sintered body according to any one of claims 1 to 8, which has a coefficient of thermal expansion of 6.5x10⁻⁶/°C or higher.

10. The zirconia sintered body according to any one of claims 1 to 9, which has a Vickers hardness of 1,250 or lower.

11. The zirconia sintered body according to any one of claims 1 to 10, which has a fracture toughness of 4 MPam^{0.5} or higher.

12. The zirconia sintered body according to any one of claims 1 to 11, which has an electrical resistivity of 10⁸ Ω·cm or lower.

13. The zirconia sintered body according to any one of claims 1 to 12, which has an achromatic lightness of from 1 to 3.5.

14. The zirconia sintered body according to any one of claims 1 to 13, which has a chromatic saturation of from 0 to 2.

15. An abrasion-resistant member comprising the zirconia sintered body according to any one of claims 1 to 14.

16. A bearing ball comprising the zirconia sintered body according to any one of claims 1 to 14.

17. A member for optical connectors which comprises the zirconia sintered body according to any one of claims 1 to 14.

18. A process for producing a zirconia sintered body which comprises sintering a raw material mixture comprising a zirconia and a titanium oxide in an oxygen-free atmosphere comprising one of hydrogen, nitrogen and water.

19. A process for producing a zirconia sintered body which comprises sintering a raw material mixture comprising a zirconia and a titanium oxide in an oxygen-free atmosphere comprising hydrogen.

20. A process for producing a zirconia sintered body which comprises sintering a raw material mixture comprising a zirconia and a titanium oxide in an oxygen-free atmosphere comprising nitrogen.

21. A process for producing a zirconia sintered body which comprises sintering a raw material mixture comprising a zirconia and a titanium oxide in an oxygen-free atmosphere comprising water.

22. A process for producing a zirconia sintered body which comprises subjecting a raw material mixture comprising a zirconia and a titanium oxide to primary sintering and subjecting the resultant product of the primary sintering to secondary sintering in an oxygen-free inert atmosphere.

23. The process for producing a zirconia sintered body according to claim 22, wherein the oxygen-free inert atmosphere is an atmosphere comprising argon gas.

24. The process for producing a zirconia sintered body according to claim 22 or 23, wherein the primary sintering is conducted in (A) an oxygen-free atmosphere comprising hydrogen, (B) an oxygen-free atmosphere comprising nitrogen, or (C) an oxygen-free atmosphere comprising water.

25. A zirconia sintered body produced by the process according to any one of claims 18 to 24, which has a relative density of 92 % or more.
